# EUROPEAN PATENT SPECIFICATION

(11) **EP 1 417 245 B1**
(45) Date of publication and mention of the grant of the patent: **27.01.2010**
(21) Application number: 02752808.2
(22) Date of filing: 13.08.2002
(51) Int. Cl.: C08G 18/42, C08G 63/60, C08G 63/20, C09D 167/00

(54) **COATING AGENTS AND A PROCESS FOR THE PREPARATION OF MULTI-LAYER COATINGS**
BESCHICHTUNGSMITTEL UND PROZESS ZUR HERSTELLUNG VON MEHRLAGIGEN BESCHICHTUNGEN
AGENTS DE REVETEMENT ET PROCEDE DE PREPARATION DE REVETEMENTS MULTICOUCHES

(30) Priority: 17.08.2001 US 932124
(43) Date of publication of application: 12.05.2004
(73) Proprietor: E.I. DU PONT DE NEMOURS AND COMPANY, Wilmington, DE 19898 (US)
(72) Inventor: FLOSBACH, Carmen, 42287 Wuppertal (DE); ten Elzen, Kerstin, 42553 Velbert (DE); MATTEN, Stefanie, 42111 Wuppertal (DE); SCHUBERT, Walter, 42119 Wuppertal (DE)
(74) Representative: Blum, Joachim
(86) International application number: PCT/US2002/025611
(87) International publication number: WO 2003/016371

(56) References cited:
- EP-A- 0 333 454
- US-A- 4 880 891

## Description

### Field of the Invention

The invention relates to a process for the preparation of external clear coat or top coat layers of multi-layer coatings.

### Background of the Invention

Polyester polyols with high hydroxyl functionality are known, for example, from US Patent 5,136,014, inter alia as binders. They are molecules having a dendritic structure and a large number of hydroxyl terminal groups. The suitability of such polyester polyols as binders in coating agents is only very limited, however, as J. Huybrechts reports (Oil and Color Chemists' Association, International Conference Surcon '97, 24th September 1997, Technical Programme Session 3, Paper 4 "Star and Hyperbranched polymers for low VOC polyurethane coatings", pages 25 to 26).

US 4,880,890 discloses a resin composition comprising a polyester polyol and a blocked polyisocyanate crosslinker. The resin composition can be used for coating metal substrates. The polyester polyol can be non-aromatic and it may have a high hydroxyl content and a high hydroxyl functionality. A specific example (Reference Example 8) is a non-aromatic polyester polyol prepared from trimethylol propane and adipic acid which has a number-average molecular weight of 623, an acid value of 3.8 mg KOH/g, a hydroxyl value of 446 mg KOH/g and a hydroxyl functionality of 5.

The present invention satisfies the demand for a coating process useful for providing automobiles and trucks with a coating, that is resistant to chemicals and scratching that occur when the automobile or truck is washed in a typical commercial car wash. The coating agent used in the coating process contains a polyester polyol binder with high hydroxyl functionality and at the same time has a high hydroxyl group content, the polyester polyol has good compatibility with other hydroxyl-functional binders, solvents and cross-linking agents.

### Summary of the Invention

The invention provides a process for forming a coating layer as one coating layer of a multi-layer coating which comprises applying to a substrate a coating layer selected from the group consisting of external pigmented top coat layer and transparent clear coat layer, said coating layer being applied from a coating agent with resin solids comprising
(a) 10 wt-% to 80 wt-%. preferably 15 wt-% to 50 wt-% of a non-aromatic polyester polyol,
(b) 0 wt-% to 70 wt%, preferably 30 wt-% to 60 wt-% of one or more hydroxyl-functional binders that are different from the polyester polyol (a) and/or hydroxyl-functional reactive thinners, and
(c) 20 wt-% to 60 wt-% of at least one cross-linking agent for the hydroxyl-functional components (a) and (b), wherein the polyester polyol (a) has a calculated molecular mass from 600 to 1400, an acid value from 0 to 30 mg KOH/g and an hydroxyl value from 250 to 600 mg KOH/g with a calculated hydroxyl functionality from 4.5 to 10, and is composed of components which comprise
(a1) hydroxyl components comprising 0 wt-% to 20 wt-% of at least one diol and 80 wt-% to 100 wt-% of at least one polyol having 3 to 6 hydroxyl groups,
(a2) carboxyl components consisting of 5 wt-% to 45 wt-% of dimer fatty acid and 55 wt-% to 95 wt-% of at least one additional dicarboxylic acid, and optionally
(a3) at least one hydroxycarboxylic acid component, the sum of the percentages by weight of components (a) to (c), of components (a1) and of components (a2) being 100% in each case, and curing said coating layer,
wherein the substrates are substrates selected from the group consisting of automotive bodies and body parts.

### Detailed Description of the Embodiments

The polyester polyol (a) preferably has a calculated molecular mass from 800 to 1200, an hydroxyl value from 270 to 400 mg KOH/g and a calculated hydroxyl functionality from 4.8 to 8.

The polyester polyol (a) is a non-aromatic polyester polyol composed of non-aromatic polyester building blocks. The polyester polyol (a) may contain aromatic structures in small quantity proportions of, for example, up to 2 wt-% (calculated as C₆, molecular mass 72). These small quantity proportions of aromatic structures may, however, be caused merely by technical impurities of the inherently non-aromatic polyester building blocks.

The polyester polyol (a) is preferably composed of 30 wt-% to 60 wt-%, preferably 40 wt-% to 55 wt-% of at least one hydroxyl component (a1), 30 wt-% to 70 wt-%, preferably 45 wt-% to 60 wt-% of at least one carboxyl component (a2) and 0 wt-% to 10 wt-%, preferably 0 wt-% of at least one hydroxycarboxylic acid component (a3). The sum of the percentages by weight of components (a1) to (a3) is 100 wt-%, and does not take into account water of reaction formed during the synthesis of polyester polyol (a).

The hydroxyl components (a1) contained in the polyester polyol (a) are composed of 0 wt-% to 20 wt-% of at least one (cyclo)aliphatic diol and 80 wt-% to 100 wt-%, preferably exclusively of at least one (cyclo)aliphatic polyol having 3 to 6 hydroxyl groups.

Examples of (cyclo)aliphatic diols as hydroxyl components (a1) for the composition of the polyester polyol (a) include ethylene glycol, 1,2-propylene glycol and 1,3-propylene glycol, butane-1,3-diol, butane-1,4-diol and butane-2,3-diol, pentane-1,5-diol, hexane-1,6-diol, trimethylhexane diol, diethylene glycol, triethylene glycol, hydrogenated bisphenols, 1,4-cyclohexane dimethanol, neopentyl glycol, butylethylpropane diol. Hexane-1,6-diol, neopentyl glycol, butylethylpropane diol are preferred. Examples of (cyclo)aliphatic polyols having 3 to 6 hydroxyl groups as hydroxyl components (a1) for the composition of the polyester polyol (a) include glycerol, trimethylolpropane, trimethylolethane, pentaerythritol, dipentaerythritol, ditrimethylolpropane, sorbitol, mannitol. Glycerol, trimethylolpropane and pentaerythritol are preferred, particularly trimethylolpropane and pentaerythritol.

The carboxyl components (a2) contained in the polyester polyol (a) consist of 5 wt-% to 45 wt-% of dimer fatty acid and 55 wt-% to 95 wt-% of at least one additional dicarboxylic acid. Dimer fatty acids are technical mixtures which may also contain olefinic and/or aromatic carbon-carbon double bonds.

Examples of dicarboxylic acids as carboxyl components (a2) for the composition of the polyester polyol (a) include (cyclo)aliphatic dicarboxylic acids, such as, tetrahydrophthalic acid, hexahydrophthalic acid, 1,3- and 1,4-cyclohexane dicarboxylic acid, succinic acid, adipic acid, sebacic acid, azelaic acid, dodecane dicarboxylic acid but also maleic acid, and fumaric acid. If they exist, the corresponding dicarboxylic acid anhydrides may also be used instead of the dicarboxylic acids.

Optionally, at least one (cyclo)aliphatic hydroxycarboxylic acid (a3) may also participate in the composition of the polyester polyol (a), but in a proportion of not more than 10 wt-% of the components (a1) to (a3) used for the composition of polyester polyol (a). Examples of hydroxycarboxylic acids include 12-hydroxystearic acid, 6-hydroxyhexanoic acid, citric acid, tartaric acid, dimethylolpropionic acid. If they exist, the corresponding lactones may also be used instead of the monohydroxycarboxylic acids.

The polyester polyol (a) is very branched and composed randomly of components (a1) to (a3). It is soluble in organic solvents and highly compatible with other hydroxyl-functional binders (b) and cross-linking agents (c).

The polyester polyol (a) may be prepared by polycondensation of the above-mentioned components (a1), (a2) and optionally (a3), components (a1) to (a3) being selected according to type and quantity such that the above-mentioned characteristic values (calculated molecular mass, calculated hydroxyl functionality, hydroxyl and acid values) are obtained for the polyester polyol (a). Polycondensation may be carried out by the conventional methods known to the skilled person, for example, in the presence of conventional esterification catalysts and at elevated temperatures from, e.g., 180°C to 250°C, for example, in the melt. Optionally, entrainers, such as, e.g., xylene, may also be used. Components (a1) to (a3) may be reacted together to polyester polyol (a) in a multi-step or preferably one-step synthesis process. All the components (a1) to (a3) are preferably charged at the same time and heated together, optionally, melted and polycondensed with one another to the polyester polyol (a).

Component (b), which is optional but preferably accounts for 30 wt-% to 60 wt-% of the resin solids, is one or more hydroxyl-functional binder(s) different from polyester polyol (a) and/or reactive thinners, particularly hydroxyl-functional (meth)acrylic copolymer resins, hydroxyl-functional polyurethane resins, hydroxyl-functional polyester resins different from polyester polyol (a) and/or hydroxyl-functional reactive thinners.

Examples of hydroxyl-functional binders (b) include conventional hydroxyl-functional polyester or polyurethane resins having a number average molecular mass from 500 to 5000, preferably from 1000 to 3000 and hydroxyl values from 30 to 250, preferably from 50 to 200 mg KOH/g and hydroxyl-functional (meth)acrylic copolymer resins having a number average molecular mass from 1000 to 10,000 and hydroxyl values from 30 to 200, preferably from 50 to 180 mg KOH/g.

Examples of hydroxyl-functional reactive thinners (b) include low molecular weight compounds having a molecular mass of, for example, below 500, at least two hydroxyl groups per molecule and hydroxyl values in the range from 250 to 700 mg KOH/g. Oligomeric or polymeric polyols are suitable, such as polyether polyols, oligoester polyols, polycarbonate polyols, polycaprolactone polyols and oligourethane polyols.

Component (c) of the resin solids is a cross-linking agent for the hydroxyl-functional components (a) and (b). More particularly, it is a conventional cross-linking agent component for the cross-linking of hydroxyl-functional binders, such as, aminoplastic resins, particularly melamine resins, polyisocyanates of which the NCO groups may be blocked, and/or transesterification cross-linking agents, such as, tris(alkoxycarbonylamino)triazines.

Preferred cross-linking agents (c) are free polyisocyanates; in that case, the coating agents are prepared only shortly before application by mixing components stored separately from one another, one of the components containing the free polyisocyanate cross-linking agent.

Examples of polyisocyanates that may be used in the free or blocked form as cross-linking agents (c) include nonane triisocyanate, tetramethylxylylene diisocyanate and (cyclo)aliphatic diisocyanates, such as 1,6-hexane diisocyanate, trimethylhexane diisocyanate, 1,12-dodecane diisocyanate, cyclohexane diisocyanate, isophorone diisocyanate, biscyclohexylmethane diisocyanate or mixtures thereof, and polyisocyanates derived from such diisocyanates, for example, those containing heteroatoms in the radical linking the isocyanate groups. Examples thereof include polyisocyanates containing carbodiimide groups, allophanate groups, isocyanurate groups, uretidione groups, urethane groups and/or biuret groups.

The conventional coating polyisocyanate cross-linking agents are particularly suitable, particularly, e.g., tris-(6-isocyanatohexyl)biuret, isophorone diisocyanate isocyanurate or hexane diisocyanate isocyanurate.

Suitable blocking agents for the polyisocyanate cross-linking agents described above include the conventional, for example, CH-acidic, NH-, SH- or OH-functional blocking agents. Examples include acetyl acetone, acetoacetic acid alkyl esters, malonic acid dialkyl esters, aliphatic or cycloaliphatic alcohols, oximes, lactams, imidazoles, pyrazoles.

The coating agents in the state ready for application have a solids content, formed from the resins solids and optionally contained non-volatile additives and optionally contained pigments, from 40 wt-% to 80 wt-%. They contain, as volatile constituents, organic solvents and/or water; but preferably are non-aqueous coating agents.

Examples of organic solvents that may be used in the coating agents include glycol ethers, such as, butyl glycol, butyl diglycol, dipropylene glycol dimethyl ether, dipropylene glycol monomethyl ether, ethylene glycol dimethylether; glycol ether esters, such as, ethyl glycol acetate, butyl glycol acetate, butyl diglycol acetate, methoxypropyl acetate; esters, such as, butyl acetate, isobutyl acetate, amyl acetate; ketones, such as, methyl ethyl ketone, methyl isobutyl ketone, diisobutyl ketone, cyclohexanone, , isophorone; alcohols, such as, methanol, ethanol, propanol, butanol; aromatic hydrocarbons, such as, xylene, Solvesso® 100 (mixture of aromatic hydrocarbons with a boiling range from 155°C to 185°C), Solvesso® 150 (mixture of aromatic hydrocarbons with a boiling range from 182°C to 202°C) and aliphatic hydrocarbons.

The coating agents may contain conventional coating additives in amounts of, for example, up to 5 wt-%, based on coating agent ready for application, for example, leveling agents, rheology influencing agents, such as, pyrogenic silica, urea group-containing reaction products of amines and polyisocyanates ("sagging control agents"), catalysts, colorants, light stabilizers, UV absorbers, antioxidants, polymer microparticles, such as, microgels, substances releasing formaldehyde.

Depending on the intended use as clear coat coating agent or as opaque coating agent, the coating agents may be unpigmented, transparent or contain opaque pigments. They may therefore contain fillers and/or transparent, color-imparting and/or special effect-imparting pigments. Examples of inorganic or organic color-imparting pigments include titanium dioxide, micronized titanium dioxide, iron oxide pigments, carbon black, azo pigments, phthalocyanine pigments, quinacridone or pyrrolopyrrole pigments. Examples of special effect-imparting pigments include metallic pigments, e.g., of aluminum, copper or other metals; interference pigments, e.g., metal oxide-coated metallic pigments, e.g., titanium dioxide-coated or mixed oxide-coated aluminum, coated mica, e.g., titanium dioxide-coated mica and graphite effect-like special-effect pigments. Examples of suitable fillers include silica, aluminum silicate, barium sulfate, calcium carbonate and talc.

The coating agents are preferably formulated on the basis of organic solvents. They may also, however, be in the water-thinnable form. Conversion to the aqueous form may take place in a conventional manner known to the skilled person by neutralization with bases, such as, amines and/or amino alcohols and/or by the addition of nonionic emulsifiers and conversion to the aqueous phase. Organic solvents may be removed before or after the addition of water, for example, by distillation. Conversion to the aqueous phase may take place, for example, using rotor-stator units.

The coating agents are used in the preparation of an external pigmented top coat or transparent clear coat layer of a multi-layer coating on substrates selected from the group consisting of automotive bodies and body parts. The external coating layer may be applied, for example, by the wet-in-wet method to a precoating applied to the substrate, whereupon both layers are cured together. The preferably non-aqueous coating agents may be applied preferably as transparent clear coats to layers applied from aqueous or solvent-containing color-imparting and/or special effect-imparting base coats.

. The coating agents are applied by known methods, particularly by spraying in a dry layer thickness of, for example, 15 µm to 50 µm. After a generally proven short flash-off phase, the applied coating agent is cross-linked preferably by heating. The baking temperatures are preferably from 60°C to 160°C, particularly preferably from 120°C to 150°C. The curing times are, for example, of the order of magnitude of 20 minutes to 40 minutes. A cross-linked, hard, glossy lacquer coating is obtained.

The coatings applied from the coating agents and cured are characterized by good resistance to chemicals, outstanding mar resistance and very good optical properties.

### EXAMPLES

### Example 1 (Preparation of a solution of a polyester polyol (a)):

A mixture of 911 g of trimethylol propane, 748 g of hexahydrophthalic anhydride and 138 g of dimer fatty acid (Empol® 1008 from Henkel) was heated to 250°C. Esterification was carried out with water separation until an acid value of less than 5 mg KOH/g was obtained. After cooling to below 125°C, the solids content was adjusted to 70% (1h/105°C) with 90 g of xylene and 641 g of methoxypropyl acetate.

The polyester polyol had an hydroxyl value of 345 mg KOH/g and an acid value of 4.5 mg KOH/g. The calculated hydroxyl functionality was 5.6 and the calculated molecular mass was 920.

Bases I and II were prepared by mixing the following constituents.

| | Base I | Base II |
|---|---|---|
| Polyester polyol (a) of Example 1 | -- | 30 |
| Polyester polyol (b) | 70 | 40 |
| Light stabilizer of the HALS type | 1.4 | 1.4 |
| UV absorber based on benztriazole | 1.4 | 1.4 |
| Commercial leveling agent (silicone oil) | 0.5 | 0.5 |
| Ethoxypropyl acetate | 9 | 9 |
| Butyl diglycol acetate | 1 | 1 |
| Solvesso® 100 | 10.2 | 10.2 |
| Solvesso® 150 | 2 | 2 |
| Butyl acetate | 4.5 | 4.5 |

Polyester polyol (b): 70 wt-% solution of a polyester polyol composed of neopentyl glycol, trimethylolpropane, hexahydrophthalic anhydride and coconut fatty acid, with an acid value of 13 mg KOH/g and an hydroxyl value of 136 mg KOH/g, a calculated hydroxyl functionality of 3.8 and a calculated molecular mass of 1500 in Solvesso® 100. The bases I and II were mixed in each case with different hardener solutions 1 to 3.

Hardener solution 1: Mixture of 81 g of hexamethylene diisocyanate isocyanurate, 9.5 g of Solvesso® 100 and 9.5 g of butyl acetate.

Hardener solution 2: Mixture of 60 g of hexamethylene diisocyanate isocyanurate, 17 g of isophorone diisocyanate isocyanurate, 11.5 g of Solvesso® 100 and 11.5 g of butyl acetate.

Hardener solution 3: Mixture of 22.5 g of hexamethylene diisocyanate isocyanurate, 43.5 g of isophorone diisocyanate isocyanurate, 17 g of Solvesso® 100 and 17 g of butyl acetate.

The clear coat coating agents obtained by mixing base and hardener solution were applied by electrostatic spraying in a dry layer thickness of 35 µm to test panels provided with a three-layer precoating of cathodic electrodeposition coating primer, primer surfacer and aqueous base coat layer, the latter having been dried for 10 minutes at 80°C. After a 10 minute flash-off at 60°C, the clear coat coating layer was baked for 30 min at 140°C (object temperature).

Table 1 gives mixing ratios between bases and cross-linking agent solutions and results of technological tests carried out on the multi-layer coatings.

**Table 1**

| Clear coats | | | | | | |
|---|---|---|---|---|---|---|
| | 1 | 2 | 3 | 4 | 5 | 6 |
| 100 parts by wt. base | I | I | I | II | II | II |
| 50 parts by wt. cross-linker solution | 1 | 2 | 3 | 1 | 2 | 3 |
| Mar resistance¹⁾ | 60 | 58 | 25 | 80 | 62 | 40 |
| Tree resin²⁾ | 37 | 38 | 45 | 45 | 53 | 56 |
| Pancreatin²⁾ | 35 | 35 | 43 | 39 | 46 | 50 |
| Sulfuric acid, 1%²⁾ | 40 | 40 | 49 | 44 | 50 | 50 |
| Sulfuric acid, droplet test, 36%, 65 °C ³⁾ | 7/23 | 9/25 | 11 /28 | 8/no etching | 10/no etching | 14/no etching |
| FAM test ⁴⁾ | 4-5 | 4-5 | 4 | 0-1 | 0 | 0 |

| | | | | | | |
|---|---|---|---|---|---|---|
| 1) The residual gloss in % was measured in each case after one hour's reflow at 60°C (ratio of initial gloss of the multi-layer coating to its gloss after scratching, gloss measurement in each case at an angle of illumination of 20°). Scratching was carried out using the laboratory-scale Amtec Kistler car wash (cf. Th. Klimmasch and Th. Engbert, Development of a uniform laboratory test method for assessing the car wash resistance of automotive top coats, in DFO Proceedings 32, pages 59 to 66, Technologie-Tage, Proceedings of the Seminar on 29. and 30.4.97 in Cologne, Published by Deutsche Forschungsgesellschaft für Oberflächenbehandlung e.V., Adersstraβe 94, 40215 Dusseldorf). 2) Temperature gradient determination, assessment 24 h after exposure, occurrence of first marking at °C 3) Determination of exposure time in minutes after which swelling/etching occurs 4) Wads of cotton wool soaked with a mixture of 90 wt. % of white spirit and 10 wt-% of ethanol were placed on the coating surface to be tested and covered for 10 minutes with a watchglass. The surface was then wiped and assessed visually immediately. Characteristic value 1 to 5; 0 = no swelling/softening, 5 = complete softening. | | | | | | |

Glossy, smooth surfaces were obtained both with the comparison clear coats 1 to 3 and with the clear coats 4 to 6. No haze occurred with any of the clear coat layers.

## Claims

1. A process for forming a coating layer as one coating layer of a multi-layer coating which comprises applying to a substrate a coating layer selected from the group consisting of external pigmented top coat layer and transparent clear coat layer, said coating layer being applied from a coating agent with resin solids comprising
(a) 10 wt-% to 80 wt-% of a non-aromatic polyester polyol,
(b) 0 wt-% to 70 wt-% of at least one constituent selected from the group consisting of hydroxyl-functional binders that are different from polyester polyol (a), hydroxyl-functional reactive thinners and combinations thereof, and
(c) 20 wt-% to 60 wt-% of at least one cross-linking agent for the hydroxyl-functional components (a) and (b),
wherein the polyester polyol (a) has a calculated molecular mass from 600 to 1400, an acid value from 0 to 30 mg KOH/g and an hydroxyl value from 250 to 600 mg KOH/g with a calculated hydroxyl functionality from 4.5 to 10, and is composed of components which comprise
(a1) hydroxyl components comprising 0 wt-% to 20 wt-% of at least one diol and 80 wt-% to 100 wt-% of at least one polyol having 3 to 6 hydroxyl groups,
(a2) carboxyl components consisting of 5 wt-% to 45 wt-% of dimer fatty acid and 55 wt-% to 95 wt-% of at least one additional dicarboxylic acid, and optionally
(a3) at least one hydroxycarboxylic acid component, the sum of the percentages by weight of components (a) to (c), of components (a1) and of components (a2) being 100% in each case,
and curing said coating layer,
wherein the substrates are substrates selected from the group consisting of automotive bodies and body parts.

2. The process of claim 1, wherein the polyester polyol (a) comprises 30 wt-% to 60 wt-% of at least one hydroxyl component (a1), 30 wt-% to 70 wt-% of at least one carboxyl component (a2) and 0 wt-% to 10 wt-% of at least one hydroxycarboxylic acid component (a3).

3. The process of claim 1 or 2, wherein the hydroxyl component (a1) consists of at least one (cyclo)aliphatic polyol having 3 to 6 hydroxyl groups.

4. The process of any one of the preceding claims, wherein the cross-linking agent (c) is selected from the group consisting of aminoplastic resins, free polyisocyanates, blocked polyisocyanates, transesterification cross-linking agents or combinations thereof.

5. The process of any one of the preceding claims, wherein the coating agent is selected from the group consisting of aqueous coating agents and coating agents based on organic solvents.

6. The process of any one of the preceding claims, wherein the substrate is provided with a color-imparting and/or special effect-imparting base coat and the coating agent is applied as a transparent clear coat.

## Patentansprüche

1. Verfahren zur Bildung einer Überzugsschicht als einer Überzugsschicht aus einer mehrlagigen Beschichtung, wobei das Verfahren aufweist: Auftragen einer Überzugsschicht, die aus der Gruppe ausgewählt ist, die aus einer äußeren pigmentierten Deckschicht und einer durchsichtigen Klarlackschicht besteht, wobei die Überzugsschicht aus einem Beschichtungsmittel mit Harzfeststoffen aufgetragen wird, das aufweist:
(a) 10 Gew.-% bis 80 Gew.-% eines nichtaromatischen Polyesterpolyols,
(b) 0 Gew.-% bis 70 Gew.-% mindestens eines Bestandteils, der aus der Gruppe ausgewählt ist, die aus hydroxylfunktionellen Bindemitteln, die sich von dem Polyesterpolyol (a) unterscheiden, hydroxylfunktionellen reaktiven Verdünnungsmitteln und Kombinationen daraus besteht, und
(c) 20 Gew.-% bis 60 Gew.-% mindestens eines Vernetzungsmittels für die hydroxylfunktionellen Komponenten (a) und (b),
wobei das Polyesterpolyol (a) eine berechnete Molekülmasse von 600 bis 1400, eine Säurezahl von 0 bis 30 mg KOH/g und eine Hydroxylzahl von 250 bis 600 mg KOH/g bei einer berechneten Hydroxylfunktionalität von 4,5 bis 10 aufweist und aus Komponenten besteht, die aufweisen:
(a1) Hydroxylkomponenten mit 0 Gew.-% bis 20 Gew.-% mindestens eines Diols und 80 Gew.-% bis 100 Gew.-% mindestens eines Polyols mit 3 bis 6 Hydroxylgruppen,
(a2) Carboxylkomponenten, die aus 5 Gew.-% bis 45 Gew.-% Dimerfettsäure und 55 Gew.-% bis 95 Gew.-% mindestens einer zusätzlichen Dicarbonsäure bestehen, und wahlweise
(a3) mindestens eine Hydroxycarbonsäurekomponente, wobei die Summe der Anteile in Gew.-% der Komponenten (a) bis (c), der Komponenten (a1) und der Komponenten (a2) in jedem Fall gleich 100% ist, und Aushärten der Überzugsschicht,
wobei die Substrate aus der Gruppe ausgewählt sind, die aus Kraftfahrzeugkarosserien und Karosserieteilen besteht.

2. Verfahren nach Anspruch 1, wobei das Polyesterpolyol (a) 30 Gew.-% bis 60 Gew.-% mindestens einer Hydroxylkomponente (a1), 30 Gew.-% bis 70 Gew.-% mindestens einer Carboxylkomponente (a2) und 0 Gew.-% bis 10 Gew.-% mindestens einer Hydroxycarbonsäurekomponente (a3) aufweist

3. Verfahren nach Anspruch 1 oder 2, wobei die Hydroxylkomponente (a1) aus mindestens einem (cyclo)aliphatischen Polyol mit 3 bis 6 Hydroxylgruppen besteht.

4. Verfahren nach einem der vorstehenden Ansprüche, wobei das Vernetzungsmittel (c) aus der Gruppe ausgewählt ist, die aus Aminoplastharzen, freien Polyisocyanaten, blockierten Polyisocyanaten, Umesterungs-Vernetzungsmitteln oder Kombinationen daraus besteht.

5. Verfahren nach einem der vorstehenden Ansprüche, wobei das Beschichtungsmittel aus der Gruppe ausgewählt ist, die aus wäßrigen Beschichtungsmitteln und auf organischen Lösungsmitteln basierenden Beschichtungsmitteln besteht.

6. Verfahren nach einem der vorstehenden Ansprüche, wobei das Substrat mit einer farbgebenden und/oder effektgebenden Grundierung bereitgestellt wird und das Beschichtungsmittel als durchsichtige Klarlackschicht aufgetragen wird.

## Revendications

1. Procédé pour la formation d'une couche de revêtement comme une couche de revêtement d'un revêtement multicouche qui comprend l'application sur un substrat d'une couche de revêtement choisie dans le groupe constitué d'une couche de couche supérieure pigmentée externe et d'une couche de couche claire transparente, ladite couche de revêtement étant appliquée à partir d'un agent de revêtement avec des solides de résine comprenant:
(a) de 10% en poids à 80% en poids d'un polyol de polyester non aromatique,
(b) de 0% en poids à 70% en poids d'au moins un constituant choisi dans le groupe constitué de liants à fonction hydroxyle qui sont différents du polyol de polyester (a), de diluants réactifs à fonction hydroxyle et de combinaisons de ceux-ci, et
(c) de 20% en poids à 60% en poids d'au moins un agent de réticulation pour les composants à fonction hydroxyle (a) et (b),
dans lequel le polyol de polyester (a) possède une masse moléculaire calculée de 600 à 1400, une valeur d'acide de 0 à 30 mg de KOH/g et une valeur d'hydroxyle de 250 à 600 mg de KOH/g avec une fonctionnalité hydroxyle calculée de 4,5 à 10 et il est composé de composants qui comprennent:
(a1) des composants hydroxyles comprenant de 0% en poids à 20% en poids d'au moins un diol et de 80% en poids à 100% en poids d'au moins un polyol possédant de 3 à 6 groupes hydroxyles,
(a2) des composants carboxyles constitués de 5% en poids à 45% en poids d'acide gras dimère et de 55% en poids à 95% en poids d'au moins un acide dicarboxylique supplémentaire, et éventuellement
(a3) au moins un composant d'acide hydroxycarboxylique, la somme des pourcentages en poids des composants (a) à (c), des composants (a1) et des composants (a2) étant de 100% dans chaque cas, et le durcissement de ladite couche de revêtement,
dans lequel les substrats sont des substrats choisis dans le groupe constitué de carrosseries automobiles et de pièces de carrosseries.

2. Procédé selon la revendication 1, dans lequel le polyol de polyester (a) comprend de 30% en poids à 60% en poids d'au moins un composant hydroxyle (a1), de 30% en poids à 70% en poids d'au moins un composant carboxyle (a2) et de 0% en poids à 10% en poids d'au moins un composant d'acide hydroxycarboxylique (a3).

3. Procédé selon la revendication 1 ou 2, dans lequel le composant hydroxyle (a1) est constitué d'au moins un polyol (cyclo)aliphatique possédant de 3 à 6 groupes hydroxyles.

4. Procédé selon l'une quelconque des revendications précédentes, dans lequel l'agent de réticulation (c) est choisi dans le groupe constitué de résines aminoplastiques, de polyisocyanates libres, de polyisocyanates bloqués, d'agents de réticulation de transestérification ou de combinaisons de ceux-ci.

5. Procédé selon l'une quelconque des revendications précédentes, dans lequel l'agent de revêtement est choisi dans le groupe constitué d'agents de revêtement aqueux et d'agents de revêtement basés sur des solvants organiques.

6. Procédé selon l'une quelconque des revendications précédentes, dans lequel le substrat est garni d'une couche de base donnant une couleur et/ou donnant un effet spécial et l'agent de revêtement est appliqué comme une couche claire transparente.
